(19) Europäisches Patentamt
European Patent Office
Office européen des brevets

(11) **EP 4 151 461 B1**

(12) **FASCICULE DE BREVET EUROPEEN**

(45) Date de publication et mention de la délivrance du brevet:
**26.06.2024 Bulletin 2024/26**

(21) Numéro de dépôt: **22196096.6**

(22) Date de dépôt: **16.09.2022**

(51) Classification Internationale des Brevets (IPC):
**B60M 1/26** *(2006.01)* **H02G 7/02** *(2006.01)*

(52) Classification Coopérative des Brevets (CPC):
**B60M 1/26; H02G 7/02**

(54) **SYSTÈME DE COMPENSATION DE LA DILATATION THERMIQUE D'UN CÂBLE À L'AIDE DE BILAMES**

SYSTEM ZUR KOMPENSATION DER THERMISCHEN AUSDEHNUNG EINES KABELS MIT BIMETALLELEMENTEN

SYSTEM FOR COMPENSATING THE THERMAL EXPANSION OF A CABLE BY MEANS OF BIMETALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2021 FR 2109844**

(43) Date de publication de la demande:
**22.03.2023 Bulletin 2023/12**

(73) Titulaire: **SNCF Voyageurs**
**93200 Saint-Denis (FR)**

(72) Inventeur: **LOYER-POLLASTRI, Andréa**
**92120 Montrouge (FR)**

(74) Mandataire: **Bringer IP**
**1, Place du Président Thomas Wilson**
**31000 Toulouse (FR)**

(56) Documents cités:
**CH-A- 346 583      DE-A1- 2 834 898**
**DE-C- 419 443       SU-A1- 754 541**

**EP 4 151 461 B1**

## Description

### Domaine technique de l'invention

L'invention concerne un système de compensation de la dilatation thermique d'un câble et en particulier d'un câble d'une caténaire dans des infrastructures ferroviaires. L'invention s'étend également à un câble d'une caténaire ferroviaire comprenant un tel système de compensation.

### Arrière-plan technologique

Les caténaires sont principalement constituées de quatre composants dont les structures, les armements, les fils de contact, et les câbles porteurs. Les structures comprennent les supports, les poteaux et les portiques qui servent à porter l'ensemble de la caténaire. La caténaire comprend notamment un armement, généralement un câble porteur, un câble auxiliaire, un câble conducteur appelé fil de contact permettant le contact avec le pantographe pour le guidage mécanique et l'acheminement du courant, un ensemble de câbles verticaux tendus entre le câble porteur, le câble auxiliaire et le fil de contact de manière à assurer la linéarité de ce dernier. L'armement de la caténaire comprend généralement, une console supportant la caténaire, un hauban de console servant plus particulièrement à régler la hauteur, un anti balançant lié au câble porteur auxiliaire et visant à empêcher toute inclinaison de la caténaire, cet anti balançant étant terminé par un bras de rappel lié au fil de contact.

Pour des raisons de mise en oeuvre et de maintien de la géométrie, la caténaire est divisée en « canton de pose » correspondant à une section sur laquelle les conducteurs sont ininterrompus. Afin de maîtriser la géométrie, en particulier la hauteur du plan de contact et la qualité du captage, on peut compenser les effets de la dilatation thermique des conducteurs par un système de régularisation.

Une solution connue pour pallier ce problème de dilatation thermique consiste à installer des dispositifs aux extrémités des cantons venant tirer sur les conducteurs, et permettent ainsi d'assurer, une constance de la tension mécanique et donc de la géométrie. Ces dispositifs peuvent être des treuils ou moufles auxquels est attaché un contrepoids, pour assurer une tension constante, tel que par exemple le dispositif Tensorex® de Pfisterer.

L'un des inconvénients de cette solution réside dans l'installation de ces systèmes aux extrémités des cantons qui imposent une rotation autour du système. La longueur du câble à enrouler équivaut à la distance au point fixe multipliée par le coefficient de dilatation thermique du câble et multipliée par le delta de température.

En général, sur les caténaires 1500V classiques, les fils de contact sont régularisés, c'est-à-dire que la dilatation thermique est compensée, et les câbles porteurs non régularisés. De ce fait, la géométrie varie de manière significative en fonction de la température.

Une autre solution connue pour pallier ce problème consiste à reprendre manuellement la tension du câble porteur du dispositif. Il s'agit d'un dispositif qui se place dans une portée d'une caténaire et qui permet à l'aide d'une vis d'augmenter la tension mécanique en exerçant une flexion trois points sur le câble porteur.

L'inconvénient réside dans le fait que l'ajustement de la tension mécanique est manuel, ponctuel et qu'il n'est pas fonction de la température.

Un autre inconvénient des solutions précédentes réside aussi dans les contraintes nécessaires pour assurer cet ajustement de la tension. En d'autres termes, ces solutions impliquent un déplacement longitudinal du câble porteur sur toute la longueur du canton. Par exemple, pour un demi-canton de 750 mètres, il faut prévoir un déplacement dû à la dilatation du câble en fonction de la température d'environ 90 centimètres. Aussi, les chaînes de suspension du câble porteur ne permettent pas un tel déplacement. De ce fait, une régularisation des câbles notamment porteurs nécessiterait d'importantes modifications des installations existantes.

Le document SU 754 541 A1 divulgue un système de compensation de la dilatation thermique d'un câble haute tension avec un dispositif bi-lame. Les documents DE 28 34 898 A1, CH 346 583 A et DE 419 443 C divulguent des systèmes de compensation de la dilatation thermique de câbles d'une caténaire ferroviaire utilisant des ressorts ou des pistons remplis d'un liquide.

Les inventeurs ont cherché à proposer une solution alternative pour assurer le maintien d'une tension mécanique constante ou non dans un câble et qui puisse équiper un câble de type caténaire dans les infrastructures ferroviaires ou de type câble électrique utilisé dans les infrastructures énergétiques (lignes hautes tensions par exemple), sans difficultés, et sans nécessiter le remplacement de ces câbles.

### Objectifs de l'invention

L'invention vise ainsi à fournir un système de compensation de la dilatation thermique qui pallie au moins certains des inconvénients des dispositifs connus.

L'invention vise en particulier à fournir, dans au moins un mode de réalisation de l'invention, un système de compensation qui puisse être monté sur un câble conducteur ou non.

L'invention vise également à fournir, dans au moins un mode de réalisation de l'invention, un système de compensation qui puisse être monté sur un câble de caténaire sans nécessiter le remplacement de la structure de la caténaire existante.

L'invention vise également à fournir, dans au moins un mode de réalisation de l'invention, un système de compensation permettant une régularisation du câble équipé d'un tel dispositif.

L'invention vise également à fournir, dans au moins un mode de réalisation de l'invention, un système de compensation qui est peu encombrant et léger.

L'invention vise également, un câble porteur principal d'une caténaire équipé d'un tel système de compensation pour permettre en outre une régularisation du câble porteur.

L'invention vise également à fournir, dans au moins un mode de réalisation de l'invention, un système de compensation permettant de jouer le rôle d'isolateur de section, c'est-à-dire permettant un découpage électrique de la caténaire.

## Exposé de l'invention

Pour ce faire, l'invention concerne un système de compensation de la dilatation thermique d'un câble principal comprenant un système de compensation de la dilatation thermique d'un câble principal comprenant une première portion de câble principal et une seconde portion de câble principal lesquelles deux portions s'étendant toutes deux selon une direction, dite direction longitudinale, et agencé entre deux points d'attache distincts, ladite première et seconde portion de câble principal étant chacune respectivement reliées à un point d'attache, ledit système de compensation étant caractérisé en ce qu'il comprend un axe de traction s'étendant de façon sensiblement parallèle à la direction longitudinale, un premier dispositif de tension relié d'une part à ladite première portion de câble principal et d'autre part à l'axe de traction, et un deuxième dispositif de tension relié d'une part à la deuxième portion de câble principal et d'autre part à l'axe de traction, chaque dispositif de tension comprenant :

- un moyen d'attache au câble principal ;
- au moins deux crémaillères, agencées de part et d'autre de l'axe de traction et sensiblement parallèles l'une à l'autre en position nominale, reliées chacune au moyen d'attache par au moins un bras de traction ;
- au moins un bilame comprenant deux lames formées dans des matériaux présentant des coefficients de dilatation thermique différents, les extrémités de chaque bilame étant reliées à chacune des crémaillères et une portion sensiblement centrale du bilame étant reliée à l'axe de traction, le bilame étant configuré pour présenter une courbure variable en fonction de la température du bilame, de sorte à exercer une force de traction variable entre l'axe de traction et la crémaillère en fonction de la température,

et en ce que chaque bilame d'un des dispositifs de tension est orienté de sorte à ce que la force de traction exercée par ledit dispositif de tension sur l'axe de traction est orientée dans un sens opposé à la force de traction exercée par l'autre dispositif de tension sur l'axe de traction lorsqu'il est soumis à la même température.

Un système de compensation selon l'invention permet donc de compenser la dilatation thermique d'un câble principal. Dans tout le texte, on désigne par les termes « câble principal » un câble qui peut être porteur tel que par exemple un porteur principal ou un porteur auxiliaire d'une caténaire, ou bien non porteur ; un câble conducteur tel qu'un fil de contact par exemple d'une caténaire ou d'une infrastructure énergétique, ou bien non conducteur. Le système de compensation comprend au moins un axe de traction permettant de relier le dispositif de réglage au câble principal.

Le système de compensation selon l'invention est lié mécaniquement au câble principal et ne nécessite pas de remplacement du câble préexistant et s'installe directement sur le câble existant.

Un système de compensation selon l'invention permet de régler la tension mécanique du câble principal lorsque ce dernier subit une dilatation thermique due aux variations de températures. Ainsi, le système de compensation peut être ajouté à un câble d'une infrastructure existante afin de permettre la régulation de la tension mécanique du câble principal selon la variation des températures.

Chaque bilame du système présente une variation de courbure en fonction de la température configurée pour compenser la dilatation thermique du câble principal. En particulier, chaque bilame a une courbure qui augmente lorsque la température augmente, grâce à la présence de deux lames à coefficients de dilatation thermique différents, une première lame et une deuxième lame. La courbure augmentée de chaque bilame applique une tension mécanique entre l'axe de traction et les crémaillères auxquelles il est attaché qui permet de compenser la dilatation thermique du câble principal. Du fait de cette tension mécanique, les crémaillères se déplacent relativement à l'axe de traction et exercent un effort de traction sur le câble principal via les bras de traction qui transmettent cet effort de traction. La courbure des bilames étant influencé par les variations de la température, elles compensent automatiquement la dilatation thermique du câble principal due à ces mêmes variations de température. Les déplacements sont donc pilotés par la température via le ou les bilames.

Le ou les bilames de chaque dispositif de tension sont configurés de sorte à exercer une force mécanique sur l'axe de traction opposée à l'autre dispositif de tension. Ainsi, les deux dispositifs de tension exercent une force opposée sur l'axe de traction, ce qui permet aux dispositifs de tension d'exercer chacun des forces opposées sur le câble principal.

La courbure $\kappa$ des bilames s'exprime selon la formule suivante :

[Math. 1]

$$\kappa = \frac{6E_1E_2(h_1 + h_2)h_1h_2\varepsilon}{E_1^2h_1^4 + 4E_1E_2h_1^3h_2 + 6E_1E_2h_1^2h_2^2 + 4E_1E_2h_2^3h_1 + E_2^2h_2^4}$$

Avec $E_1$ le module d'Young du matériau de la première lame, $E_2$ le module d'Young du matériau de la deuxième lame, $h_1$ l'épaisseur de la première lame, $h_2$ l'épaisseur de la deuxième lame, et $\varepsilon$ le produit de l'écart de température par la différence de coefficient de dilatation entre les deux matériaux. L'écart de température est défini comme étant l'écart entre la température à laquelle est soumis le bilame et une température de référence du bilame au repos, par exemple la température à laquelle les deux lames du bilame ont la même longueur et le bilame est donc droit. La température de référence peut aussi être une température à laquelle le bilame présente une courbure compensant la tension mécanique à une température moyenne de la plage de température que le système de compensation cherche à compenser.

Les bilames sont donc configurés pour présenter une position de repos à la température de référence et une position d'effort lorsqu'un écart de température apparait avec la température de référence. Les bilames des deux dispositifs de tension sont de préférences identiques, avec une orientation différente pour chaque dispositif de tension ce qui permet d'obtenir deux forces de traction opposée compensant la dilatation du câble principal.

Le rayon r de courbure est égal à l'inverse de la courbure et permet de calculer la flèche f de chaque bilame selon la formule suivante :

[Math. 2]

$$f = r - (r^2 - l^2)^{1/2}$$

Avec l la demi-longueur du bilame, c'est-à-dire la moitié de la longueur totale du bilame. La flèche de chaque bilame permet de connaître le déplacement relatif que peut compenser le bilame à une température donnée.

Le système de compensation selon l'invention vise à compenser la dilatation thermique du câble principal. La dilatation thermique provoque un déplacement « d » à rattraper proportionnel à la longueur « a » de la portée, dans une amplitude « R » de température ciblée par l'invention, en fonction du coefficient « $\alpha$ » de dilatation du matériau dans lequel est formé le câble principal, généralement du cuivre. La formule est la suivante :

[Math. 3]

$$d = a * R * \alpha$$

En pratique, dans un contexte d'installation ferroviaire classique par exemple du réseau français de voie ferrée, la longueur « a » de la portée est généralement de l'ordre de vingt à cinquante-quatre mètres, l'amplitude « R » de température est de l'ordre de quelques dizaines de degrés Celsius, et le coefficient « $\alpha$ » de dilatation du cuivre est égal à $17* 10^{-6}$ $K^{-1}$. Le déplacement à compenser est donc de l'ordre d'un à dix centimètres, généralement d'un à cinq centimètres. L'objectif est donc que la flèche du bilame soit proche du déplacement à compenser.

Les bilames permettent la reprise de tension du câble principal sans nécessiter l'intervention d'un opérateur lorsque le réglage est manuel et sans nécessiter le changement en intégralité du système de câble. Ce système de compensation permet donc un gain de temps tout en offrant une solution peu encombrante adaptable à tout type de câble et d'infrastructures.

De préférence, ce système de compensation est particulièrement bien adapté pour les câbles conducteurs d'un système de caténaire, pouvant s'adapter à un câble continu ou bien en coupant le câble ou le fil pour installer le système. L'installation en gardant le câble continu est plus robuste, tandis que celle où l'on coupe le câble permet de former un isolateur de section par l'introduction d'une séparation électrique entre les deux parties du câble principal ou du fil de contact.

L'invention permet d'assurer une tension mécanique en cas d'éventuelle dilatation du câble principal et le système de compensation ne nécessite pas d'accroche fixe sur un support correspondant à un point d'attache formé par exemple dans le cas d'une caténaire par un poteau.

En outre le système de compensation de la dilatation thermique d'un câble selon l'invention permet un réglage de la tension mécanique du câble principal qui s'affranchit de l'intervention d'un opérateur. L'axe de traction permet de soutenir le câble principal par l'intermédiaire du système de compensation lors de la dilatation thermique du câble principal.

L'invention permet en outre de compenser la dilatation thermique d'un câble sans nécessiter de lourdes modifications et adaptations des infrastructures existantes.

Avantageusement et selon l'invention, le dispositif de tension comprend une pluralité de bilames, configurés pour présenter le même rayon de courbure en fonction de la température du bilame.

Selon cet aspect de l'invention, les bilames forment un réseau de bilame, sur chacun des dispositifs de tension, le nombre de bilames étant adapté en fonction de la sollicitation mécanique de chaque bilame, en particulier lorsque sa flexion est maximale dans l'intervalle de température considéré, en prenant en compte une marge de sécurité nécessaire selon les usages. Le calcul du nombre de bilames nécessaires peut être réalisé par calcul de résistance de matériaux en fonction de la sollicitation en flexion de chaque bilame, ou bien par essais expérimentaux pour déterminer la charge provoquant la rupture du bilame.

De préférence, le nombre de bilames sur chaque dispositif de tension est compris entre 5 et 30 pour une application d'un système de compensation de la dilatation thermique d'un câble principal ferroviaire.

La longueur des crémaillères est déterminée en fonction du nombre de bilames sur chaque dispositif de tension et de la courbure des bilames dans l'intervalle de température considéré lors de l'utilisation du système de compensation.

Avantageusement et selon l'invention, chaque bilame comprend une première lame formée d'un alliage de fer et de nickel comprenant de l'ordre de 36% de nickel et 64% de fer, et une deuxième lame formée de cuivre.

Selon cet aspect de l'invention, l'alliage de fer et de nickel dans les proportions 64%-36% présente un coefficient de dilatation thermique faible particulièrement adapté à l'utilisation pour un bilame. Le cuivre est utilisé car il présente un coefficient de dilatation plus élevé que l'alliage de fer et de nickel. L'alliage de fer et de nickel dans les proportions décrites est plus connu sous le nom de Invar®, en particulier Invar 36®.

Avantageusement et selon l'invention, chaque bilame comprend une pliure agencée sensiblement dans sa partie centrale.

Selon cet aspect de l'invention, la pliure des bilames permet de diminuer la compensation totale du système de compensation, en particulier en diminuant le déplacement des crémaillères par rapport à l'axe de traction. L'utilisation de bilames avec pliure permet, avec les mêmes paramètres thermomécaniques de s'adapter à des portées de câbles plus petites.

Avantageusement et selon l'invention, chaque bilame comprend un alésage agencé sensiblement dans la partie centrale et configuré pour recevoir l'axe de traction.

Selon cet aspect de l'invention, chaque bilame est relié à l'axe de traction par l'alésage et peut transmettre la force de traction.

Avantageusement et selon l'invention, chaque bras de traction est relié par une liaison pivot au moyen d'attache et par une liaison pivot à la crémaillère.

Selon cet aspect de l'invention, les liaisons pivot évitent le bridage du mécanisme et permettent le déplacement nécessaire à la compensation de la dilatation.

Avantageusement et selon l'invention, au moins un dispositif de tension comprend un capot de protection, relié à la crémaillère du dispositif de tension et s'étendant en regard d'une crémaillère de l'autre dispositif de tension du système de compensation.

Selon cet aspect de l'invention, le capot de protection est notamment utilisé lorsque le dispositif est utilisé sur un fil de contact (conducteur au contact du pantographe). Dans cet usage, le conducteur est interrompu sous le dispositif et le capot de protection sert à assurer le bon guidage du pantographe sous le dispositif afin de protéger tant le dispositif que le pantographe, permettant ainsi l'utilisation sur un fil de contact sans heurt avec le pantographe ou tout autre objet qui viendrait glisser de manière guidée sur le fil de contact.

L'invention concerne aussi un câble de caténaire équipé d'un système de compensation de la dilatation thermique selon l'invention, configuré pour compenser la dilatation thermique dudit câble de caténaire agencé entre deux points d'attache distincts formés par des poteaux.

L'invention concerne de manière avantageuse un câble ou fil conducteur de caténaire équipé d'un système de compensation de la dilatation thermique selon l'invention, configuré pour compenser la dilatation thermique dudit câble conducteur agencé entre deux points d'attache distincts.

Les avantages et effets techniques du système de compensation selon l'invention s'appliquent *mutatis mutandis* à un câble de caténaire équipé d'un système de compensation selon l'invention et à un câble conducteur de caténaire équipé d'un système de compensation selon l'invention.

L'invention concerne également un système de compensation et un câble de caténaire équipé d'un système de compensation selon l'invention, caractérisés en combinaison par tout ou partie des caractéristiques mentionnées ci-dessus ou ci-après.

**Liste des figures**

D'autres buts, caractéristiques et avantages de l'invention apparaîtront à la lecture de la description suivante donnée à titre uniquement non limitatif et qui se réfère aux figures annexées dans lesquelles :

[Fig. 1a] est une vue schématique du dessus d'un système de compensation en position sur un câble principal, selon un premier mode de réalisation de l'invention,
[Fig. 1b] est une vue schématique de côté d'un système de compensation en position sur un câble principal, selon le premier mode de réalisation de l'invention,
[Fig. 2a] est une vue schématique du dessus d'un système de compensation en position sur un câble principal, selon un deuxième mode de réalisation de l'invention,
[Fig. 2b] est une vue schématique de côté d'un système de compensation en position sur un câble principal, selon le deuxième mode de réalisation de l'invention,
[Fig. 3a] est une vue schématique de côté d'un premier mode de réalisation d'un bilame d'un système de compensation,
[Fig. 3b] est une vue schématique de face du premier mode de réalisation d'un bilame d'un système de compensation
[Fig. 4a] est une vue schématique de côté d'un deuxième mode de réalisation d'un bilame d'un système de compensation,
[Fig. 4b] est une vue schématique de face du deuxième mode de réalisation d'un bilame d'un système de compensation, selon un deuxième mode de réalisation de l'invention,
[Fig. 5a] est une vue schématique du dessus du fonctionnement d'un système de compensation comprenant le premier mode de réalisation du bilame.
[Fig.5b] est une vue schématique du dessus du fonctionnement d'un système de compensation comprenant le deuxième mode de réalisation du bilame.

**Description détaillée de modes de réalisation de l'invention**

Sur les figures, les échelles et les proportions ne sont pas strictement respectées et ce, à des fins d'illustration et de clarté. Dans toute la description détaillée qui suit en référence aux figures, sauf indication contraire, chaque élément du système de compensation est décrit tel qu'il est agencé lorsqu'il est fixé au voisinage d'un câble principal porteur d'une caténaire relié entre deux poteaux formant les points d'attache, les points d'attache délimitent ainsi une portée. En outre, les éléments identiques, similaires ou analogues sont désignés par les mêmes références sur toutes les figures.

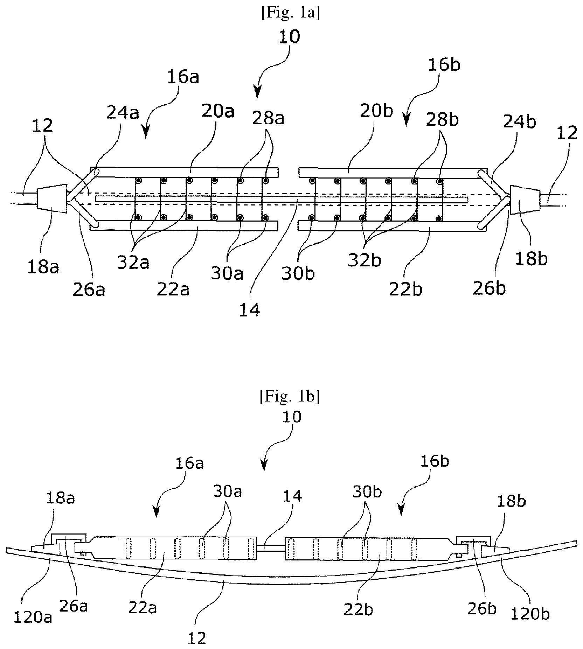

Les figures 1a et 1b représentent schématiquement un système 10a de compensation en position sur un câble principal, selon un premier mode de réalisation de l'invention, respectivement en vue du dessus et de côté.

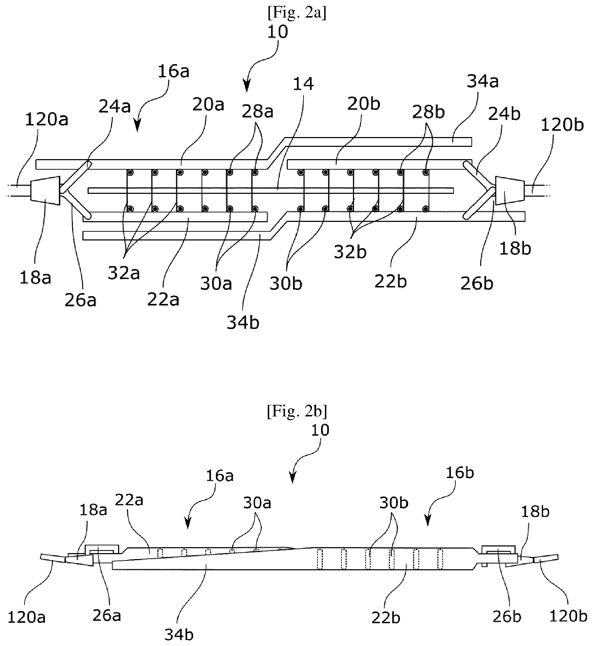

Les figures 2a et 2b représentent schématiquement un système 10b de compensation en position sur un câble principal, en particulier un câble conducteur de courant ou un fil de contact, selon un deuxième mode de réalisation de l'invention, respectivement en vue du dessus et de côté.
Dans les deux modes de réalisation représentés, les systèmes 10a, 10b de compensation sont installés sur un câble 12 principal qui peut être par exemple un câble porteur de caténaire, un fil de contact ou un câble conducteur de courant. Seule une partie du câble 12 principal est représentée, et sur la figure 1a en vue du dessus, la portion du câble principal agencée en dessous du système de compensation est représentée en pointillée pour des raisons de clarté. Le câble 12 principal est relié aux points d'attache (non visibles) et la droite reliant les deux points d'attache du câble 12 principal forme une direction longitudinale selon laquelle s'étend sensiblement le câble principal, sous réserve de l'action de la gravité et de la dilatation thermique. La courbure du câble principal tel que représentée a un but illustratif et n'est pas forcément représentatif de la courbure d'un câble principal réel.
Le système de compensation comprend un axe 14 de traction et deux dispositifs de tension, un premier dispositif 16a de tension relié d'une part au câble 12 principal par un premier moyen 18a d'attache au niveau d'une première portion 120a du câble principal et d'autre part à l'axe 14 de traction, et un deuxième dispositif 16b de tension relié au d'une part au câble 12 principal par un deuxième moyen 18b d'attache au niveau d'une deuxième portion 120b du câble principal et d'autre part à l'axe 14 de traction. Selon le mode de réalisation représenté sur la figure 2a, le câble principal est discontinu entre la première portion 120a du câble principal et la deuxième portion 120b du câble principal. Si le câble principal est un câble conducteur, le système de compensation peut ainsi jouer un rôle d'isolateur de section.
Le premier dispositif 16a de tension comprend deux crémaillères, une première crémaillère 20a et une deuxième crémaillère 22a, agencées de part et d'autre l'axe 14 de traction et sensiblement parallèles l'une à l'autre en position nominale. Chaque crémaillère comprend au moins une, ici six attaches 28a pour la première crémaillère 20a et six attaches 30a pour la crémaillère 22a permettant de recevoir au moins un, ici six bilames 32a.

Le deuxième dispositif 16b de tension comprend deux crémaillères, une première crémaillère 20b et une deuxième crémaillère 22b, agencées de part et d'autre l'axe 14 de traction et sensiblement parallèles l'une à l'autre en position nominale. Chaque crémaillère comprend au moins une, ici six attaches 28b pour la première crémaillère 20b et six attaches 30b pour la crémaillère 22b permettant de recevoir au moins un, ici six bilames 32b. Les différentes pièces de chaque dispositif de tension sont conçues pour être assemblés les unes aux autres par des liaisons simples de type pivot avec un axe et un alésage, et sont verrouillés par une goupille ou tout autre dispositif de sécurisation. Dans le deuxième mode de réalisation de l'invention, les dispositifs de tension comprenant chacun un capot 34a, 34b de protection relié la crémaillère du dispositif de tension et s'étendant en regard d'une crémaillère de l'autre dispositif de tension du système de compensation.

Les bilames 32a et 32b de chaque dispositif de tension comprennent deux lames formées dans des matériaux présentant des coefficients de dilatation thermique différents, en particulier dans ces modes de réalisation une première lame en Invar 36® présentant un faible coefficient de dilatation thermique et une deuxième lame en cuivre présentant un coefficient de dilatation thermique plus élevé. Les extrémités de chaque bilame 32a, 32b sont reliées à chacune des crémaillères et une portion sensiblement centrale du bilame est reliée à l'axe 14 de traction, chaque bilame 32a, 32b étant configuré pour présenter une courbure variable en fonction de la température du bilame, de sorte à exercer une force de traction variable entre l'axe de traction et la crémaillère en fonction de la température. Les bilames du premier dispositif 16a de tension sont orientés de sorte à ce que la force de traction exercée par le premier dispositif 16a de tension sur l'axe 14 de traction est orientée dans un sens opposé à la force de traction exercée par le deuxième dispositif 16b de tension sur l'axe 14 de traction lorsqu'il est soumis à la même température. Les bilames des deux dispositifs de tension sont de préférences identiques, avec une orientation différente. Le nombre de bilames dépend des contraintes mécaniques qui leur sont appliquées et de leur résistance mécanique. L'axe 14 de traction est par exemple un axe cylindrique formé de d'acier ou de cuivre dans les cas où le système de compensation ne sert pas également d'isolateur de section, sinon d'un barreau isolant, généralement en fibre de verre enrobée de silicone.

Chaque bilame comprend une partie sensiblement centrale, dite partie centrale, reliée à l'axe de traction. Les portions du bilame s'étendant de part et d'autre de la partie centrale ont des longueurs appelées demi-longueur du bilame, par exemple compris entre deux et dix centimètres. L'épaisseur du bilame est par exemple inférieure au millimètre. À titre d'exemple, une demi-longueur de trois centimètres et demi et une épaisseur du bilame égale à un demi-millimètre (un quart de millimètre par lame) permettent une compensation de la dilatation thermique d'un câble principal pour un intervalle de température de l'ordre de 35°C et une portée de vingt mètres.

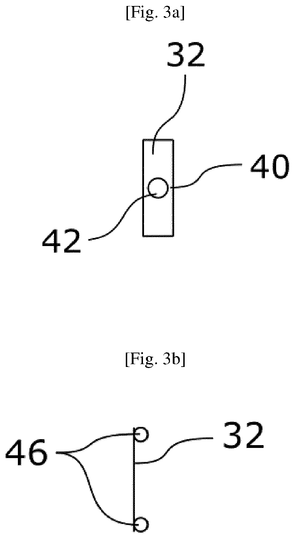

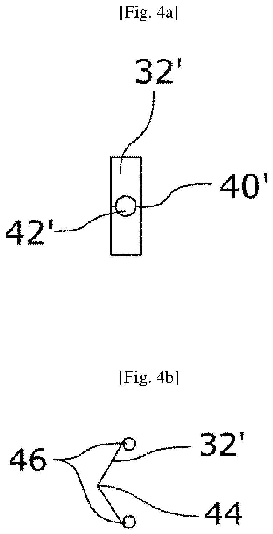

Un premier mode de réalisation d'un bilame 32 est représenté respectivement de face et de côté sur les figures 3a et 3b et un deuxième mode de réalisation d'un bilame 32' est représenté respectivement de face et de côté sur les figures 4a et 4b.

Dans le premier mode de réalisation du bilame 32 en position nominale à la température de référence, les deux lames sont de longueurs identiques et le bilame est donc droit. Un alésage 42 agencé dans la partie 40 centrale du bilame permet de recevoir l'axe de traction.

Dans le deuxième mode de réalisation du bilame 32' en position nominale à la température de référence, les deux lames sont de longueurs identiques et le bilame comprend une pliure agencée 44 sur sa partie centrale 40'. Un alésage 42' agencé dans la partie 40' centrale du bilame permet de recevoir l'axe de traction.

Les bilames selon les deux modes de réalisation comprennent des systèmes d'accroche aux attaches des crémaillères, ici des alésages 46.

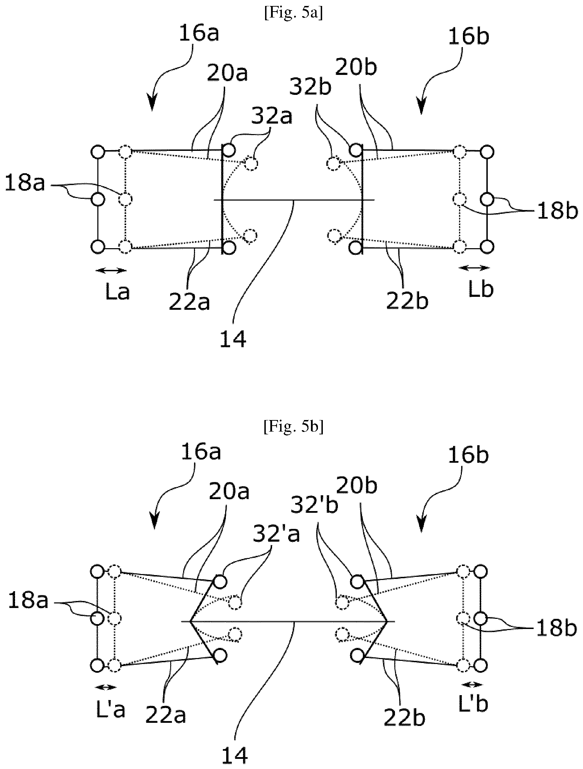

Les figures 5a et 5b représentent schématiquement en vue du dessus le fonctionnement d'un système de compensation comprenant respectivement le premier mode de réalisation du bilame et le deuxième mode de réalisation du bilame. Les traits pleins représentent le système de compensation en position dite de repos et les traits en pointillés représentent le système de compensation lorsqu'il est soumis à une différence de température par rapport à la température de la position de repos.

Dans le premier mode de réalisation du bilame, le changement de température entraîne une courbure du bilame 32a du premier dispositif 16a de tension et du bilame 32b du deuxième dispositif 16b de tension, tous deux reliés à l'axe 14 de traction. Un effort de traction est alors répercuté d'une part dans le premier dispositif 16a de tension aux crémaillères 20a et 22a puis au premier moyen 18a d'attache ce qui entraîne un premier déplacement La au niveau du premier moyen 18a d'attache, et d'autre part d'une part dans le deuxième dispositif 16b de tension aux crémaillères 20b et 22b puis au deuxième moyen 18b d'attache ce qui entraîne un deuxième déplacement Lb au niveau du deuxième moyen 18a d'attache. Les déplacements La et Lb sont généralement égaux si le système est équilibré et permettent de compenser le déplacement dû à la dilatation thermique du câble principal.

Dans le deuxième mode de réalisation du bilame, le changement de température entraîne une courbure du bilame 32'a plié du premier dispositif 16a de tension et du bilame 32'b plié du deuxième dispositif 16b de tension, tous deux reliés à l'axe 14 de traction. Un effort de traction est alors répercuté d'une part dans le premier dispositif 16a de tension aux crémaillères 20a et 22a puis au premier moyen 18a d'attache ce qui entraîne un premier déplacement L'a au niveau du premier moyen 18a d'attache, et d'autre part d'une part dans le deuxième dispositif 16b de tension aux crémaillères 20b et 22b puis au deuxième moyen 18b d'attache ce qui entraîne un deuxième déplacement L'b au niveau du deuxième moyen 18a d'attache. Les déplacements L'a et L'b sont généralement égaux si le système est équilibré et permettent de compenser le déplacement dû à la dilatation thermique du câble principal. Les déplacements avec ce deuxième mode de réalisation du bilame, dit bilame plié, sont inférieurs aux déplacements du premier bilame, ce qui permet de compenser un déplacement plus faible avec la même différence de température, par exemple pour une application sur un câble principal de portée plus petite.

Le fonctionnement tel que décrit dans les figures 5a et 5b est le même lorsque chaque dispositif de tension comprend plusieurs bilames.

**Revendications**

1. Système de compensation de la dilatation thermique d'un câble (12) principal comprenant une première portion (120a) de câble principal et une seconde portion (120b) de câble principal lesquelles deux portions s'étendant toutes deux selon une direction, dite direction longitudinale, et agencé entre deux points d'attache distincts, ladite première et seconde portion de câble principal étant chacune respectivement reliées à un point d'attache, ledit système de compensation étant **caractérisé en ce qu'**il comprend un axe (14) de traction s'étendant de façon sensiblement parallèle à la direction longitudinale, un premier dispositif (16a) de tension relié d'une part à ladite première portion (120a) de câble principal et d'autre part à l'axe (14) de traction, et un deuxième (16b) dispositif de tension relié d'une part à la deuxième portion (120b) de câble principal et d'autre part à l'axe (14) de traction, chaque dispositif (16a, 16b) de tension comprenant :

   - un moyen (18a, 18b) d'attache au câble principal ;
   - au moins deux crémaillères (20a, 22a ; 20b, 22b), agencées de part et d'autre de l'axe (14) de traction et sensiblement parallèles l'une à l'autre en position nominale, reliées chacune au moyen (18a, 18b) d'attache par au moins un bras (24a, 26a ; 24b, 26b) de traction ;
   - au moins un bilame (32a, 32b) comprenant deux lames formées dans des matériaux présentant des coefficients de dilatation thermique différents, les extrémités de chaque bilame étant reliées à chacune des crémaillères (20a, 22a ; 20b, 22b) et une portion sensiblement centrale du bilame étant reliée à l'axe (14) de traction, le bilame (32a, 32b) étant configuré pour présenter une courbure variable en fonction de la température du bilame, de sorte à exercer une force de traction variable entre l'axe (14) de traction et la crémaillère en fonction de la température,

   et **en ce que** chaque bilame (32a, 32b) d'un des dispositifs (16a, 16b) de tension est orienté de sorte à ce que la force de traction exercée par ledit dispositif (16a, 16b) de tension sur l'axe de traction est orientée dans un sens opposé à la force de traction exercée par l'autre dispositif (16a, 16b) de tension sur l'axe de traction lorsqu'il est soumis à la même température.

2. Système de compensation selon la revendication 1, **caractérisé en ce que** chaque dispositif (16a, 16b) de tension comprend une pluralité de bilames (32a, 32b), configurés pour présenter le même rayon de courbure en fonction de la température du bilame.

3. Système de compensation selon l'une des revendications 1 ou 2, **caractérisé en ce que** chaque bilame (32a, 32b) comprend une première lame formée d'un alliage de fer et de nickel comprenant de l'ordre de 36% de nickel et 64% de fer, et une deuxième lame formée de cuivre.

4. Système de compensation selon l'une des revendications 1 à 3, **caractérisé en ce que** chaque bilame (32') comprend une pliure (44) agencée sensiblement dans sa partie centrale.

5. Système de compensation selon l'une des revendications 1 à 4, **caractérisé en ce que** chaque bilame (32a, 32b) comprend un alésage agencé sensiblement dans la partie centrale et configuré pour recevoir l'axe (14) de traction.

6. Système de compensation selon l'une des revendications 1 à 5, **caractérisé en ce que** chaque bras (24a, 26a ; 24b, 26b) de traction est relié par une liaison pivot au moyen (18a, 18b) d'attache et par une liaison pivot à la crémaillère.

7. Système de compensation selon l'une des revendications 1 à 6, **caractérisé en ce qu'**au moins un dispositif (16a, 16b) de tension comprend un capot (34a, 34b) de protection, relié à la crémaillère (20a, 22a ; 20b, 22b) du dispositif de tension et s'étendant en regard d'une crémaillère (20a, 22a ; 20b, 22b) de l'autre dispositif de tension du système de compensation.

8. Câble de caténaire équipé d'un système (10) de compensation de la dilatation thermique selon l'une des revendications 1 à 7, configuré pour compenser la dilatation thermique dudit câble de caténaire agencé entre deux points d'attache distincts formés par des poteaux.

**Patentansprüche**

1. System zum Kompensieren der thermischen Ausdehnung eines Hauptkabels (12), mit einem ersten Hauptkabelabschnitt (120a) und einem zweiten Hauptkabelabschnitt (120b), die sich beide in einer Richtung, der Längsrichtung, erstrecken und zwischen zwei verschiedenen Befestigungspunkten angeordnet sind, worin der erste und der zweite Hauptkabelabschnitt jeweils mit einem entsprechenden Befestigungspunkt verbunden sind, worin das Kompensationssystem **dadurch gekennzeichnet ist, dass** es eine Zugstange (14), die sich im Wesentlichen parallel zur Längsrichtung erstreckt, eine erste Spannvorrichtung (16a), die einerseits mit dem ersten Hauptkabelabschnitt (120a) und andererseits mit der Zugstange (14) verbunden ist, und eine zweite Spannvorrichtung (16b) umfasst, die einerseits mit dem zweiten Hauptkabelabschnitt (120b) und andererseits mit der Zugstange (14) verbunden ist, worin jede Spannvorrichtung (16a, 16b) umfasst:

   - ein Mittel (18a, 18b) zur Befestigung an dem Hauptseil;
   - mindestens zwei Zahnstangen (20a, 22a; 20b, 22b), die beiderseits der Zugstange (14) und in der Nennstellung im Wesentlichen parallel zueinander angeordnet sind und jeweils durch mindestens einen Zugarm (24a, 26a; 24b, 26b) mit den Befestigungsmitteln (18a, 18b) verbunden sind;
   - mindestens einen Bimetallstreifen (32a, 32b), der zwei Streifen aus Materialien mit unterschiedlichen Wärmeausdehnungskoeffizienten umfasst, worin die Enden jedes Bimetallstreifens mit jeder der Zahnstangen (20a, 22a ; 20b, 22b) verbunden sind und ein im Wesentlichen zentraler Abschnitt des Bimetallstreifens mit der Zugstange (14) verbunden ist, worin der Bimetallstreifen (32a, 32b) ausgestaltet ist, eine variable Krümmung in Abhängigkeit von der Temperatur des Bimetallstreifens aufzuweisen, um eine variable Zugkraft zwischen der Zugstange (14) und der Zahnstange in Abhängigkeit von der Temperatur auszuüben,

   und dass jeder Bimetallstreifen (32a, 32b) einer der Spannvorrichtungen (16a, 16b) so ausgerichtet ist, dass die Zugkraft, die von der besagten Spannvorrichtung (16a, 16b) auf die Zugstange ausgeübt wird, und in einer Richtung ausgerichtet ist, die der Zugkraft entgegengesetzt ist, die von der anderen Spannvorrichtung (16a, 16b) auf die Zugstange ausgeübt wird, wenn diese der gleichen Temperatur ausgesetzt ist.

2. Kompensationssystem nach Anspruch 1, **dadurch gekennzeichnet, dass** jede Spannvorrichtung (16a, 16b) mehrere Bimetallstreifen (32a, 32b) umfasst, die ausgestaltet sind, den gleichen Krümmungsradius in Abhängigkeit von der Temperatur des Bimetallelementes aufzuweisen.

3. Kompensationssystem nach einem der Ansprüche 1 oder 2, **dadurch gekennzeichnet, dass** jeder Bimetallstreifen (32a, 32b) einen ersten Streifen aus einer Eisen-Nickel-Legierung, die in der Größenordnung von 36% Nickel und 64% Eisen liegt, und einen zweiten Streifen aus Kupfer umfasst.

4. Kompensationssystem nach einem der Ansprüche 1 bis 3, **dadurch gekennzeichnet, dass** jeder Bimetallstreifen (32') eine Falte (44) aufweist, die im Wesentlichen in seinem Mittelteil angeordnet ist.

5. Kompensationssystem nach einem der Ansprüche 1 bis 4, **dadurch gekennzeichnet, dass** jeder Bimetallstreifen (32a, 32b) eine Bohrung aufweist, die im Wesentlichen im Mittelteil angeordnet und ausgestaltet ist, die Zugstange (14) aufzunehmen.

6. Kompensationssystem nach einem der Ansprüche 1 bis 5, **dadurch gekennzeichnet, dass** jeder Zugarm (24a, 26a; 24b, 26b) über eine Gelenkverbindung mit dem Befestigungsmittel (18a, 18b) und über eine Gelenkverbindung mit der Zahnstange verbunden ist.

7. Kompensationssystem nach einem der Ansprüche 1 bis 6, **dadurch gekennzeichnet, dass** mindestens eine Spannvorrichtung (16a, 16b) eine Schutzabdeckung (34a, 34b) aufweist, die mit der Zahnstange (20a, 22a; 20b, 22b) der Spannvorrichtung verbunden ist und sich gegenüber einer Zahnstange (20a, 22a; 20b, 22b) der anderen Spannvorrichtung des Kompensationssystems erstreckt.

8. Oberleitungskabel, das mit einem System (10) zur Kompensation der thermischen Ausdehnung nach einem der Ansprüche 1 bis 7 versehen ist, welches ausgestaltet ist, die thermische Ausdehnung des Oberleitungskabels zu kompensieren, das zwischen zwei verschiedenen, durch Masten gebildeten Befestigungspunkten angeordnet ist.

**Claims**

1. System for compensating the thermal expansion of a main cable (12) comprising a first main cable portion (120a) and a second main cable portion (120b), which two portions both extend in one direction, said longitudinal direction, and arranged between two distinct attachment points, said first and second main cable portions each being connected to a respective attachment point, said compensation system being **characterized in that** it comprises a traction shaft (14) extending substantially parallel to the longitudinal direction, a first tensioning device (16a) connected on the one hand to said first main cable portion (120a) and on the other hand to the traction shaft (14), and a second tensioning device (16b) connected on the one hand to the second main cable portion (120b) and on the other hand to the traction shaft (14), each tensioning device (16a, 16b) comprising :

    - a means (18a, 18b) of attachment to the main cable ;
    - at least two racks (20a, 22a; 20b, 22b), arranged on either side of the traction shaft (14) and substantially parallel to each other in the nominal position, each connected to the attachment means (18a, 18b) by at least one traction arm (24a, 26a; 24b, 26b);
    - at least one bimetallic strip (32a, 32b) comprising two strips formed from materials having different coefficients of thermal expansion, the ends of each bimetallic strip being connected to each of the racks (20a, 22a ; 20b, 22b) and a substantially central portion of the bimetallic strip being connected to the traction pin (14), the bimetallic strip (32a, 32b) being configured to have a variable curvature as a function of the temperature of the bimetallic strip, so as to exert a variable traction force between the traction shaft (14) and the rack as a function of temperature,

    and **in that** each bimetallic strip (32a, 32b) of one of the tensioning devices (16a, 16b) is oriented so that the tensile force exerted by the said tensioning device (16a, 16b) on the traction shaft is oriented in a direction opposite to the tensile force exerted by the other tensioning device (16a, 16b) on the traction shaft when subjected to the same temperature.

2. Compensation system according to claim 1, **characterized in that** each tensioning device (16a, 16b) comprises a plurality of bimetallic strip (32a, 32b), configured to have the same radius of curvature as a function of the temperature of the bimetal element.

3. Compensation system according to one of claims 1 or 2, **characterized in that** each bimetallic strip (32a, 32b) comprises a first strip formed of an alloy of iron and nickel comprising in the order of 36% nickel and 64% iron, and a second strip formed of copper.

4. Compensation system according to one of claims 1 to 3, **characterized in that** each bimetallic strip (32') comprises a fold (44) arranged substantially in its central part.

5. Compensation system according to one of claims 1 to 4, **characterized in that** each bimetallic strip (32a, 32b) comprises a bore arranged substantially in the central part and configured to receive the traction shaft (14).

6. Compensation system according to one of claims 1 to 5, **characterized in that** each traction arm (24a, 26a; 24b, 26b) is connected by a pivot connection to the attachment means (18a, 18b) and by a pivot connection to the rack.

7. Compensation system according to one of claims 1 to 6, **characterized in that** at least one tensioning device (16a, 16b) comprises a protective cover (34a, 34b) connected to the rack (20a, 22a; 20b, 22b) of the tensioning device and extending facing a rack (20a, 22a; 20b, 22b) of the other tensioning device of the compensation system.

8. Catenary cable equipped with a thermal expansion compensation system (10) according to one of claims 1 to 7, configured to compensate for the thermal expansion of said catenary cable arranged between two distinct attachment points formed by posts.

[Fig. 1a]

[Fig. 1b]

[Fig. 2a]

[Fig. 2b]

[Fig. 3a]

[Fig. 3b]

[Fig. 4a]

32'

40'

42'

[Fig. 4b]

46

32'

44

[Fig. 5a]

[Fig. 5b]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- SU 754541 A1
- DE 2834898 A1
- CH 346583 A
- DE 419443 C